# EUROPEAN PATENT SPECIFICATION

(11) **EP 1 232 966 B1**
(45) Date of publication and mention of the grant of the patent: **03.09.2008**
(21) Application number: 01830101.0
(22) Date of filing: 15.02.2001
(51) Int. Cl.: B65G 17/44, B65G 37/00

(54) **Device for holding products in a transfer line**
Vorrichtung zum Halten von Produkten in einer Förderlinie
Dispositif de maintien des articles dans une ligne de transfert

(43) Date of publication of application: 21.08.2002
(73) Proprietor: Rexnord Marbett S.p.A., 42015 Correggio (Reggio Emilia) (IT)
(72) Inventor: Coen, Daniele, 42100 Reggio Emilia (IT)
(74) Representative: Prins, Adrianus Willem

(56) References cited:
- DE-C- 4 424 110
- GB-A- 2 196 925
- US-A- 5 090 557
- US-A- 5 429 226

## Description

The present invention relates to a device for holding products in a transfer line, comprising a gripping member, a support member designed to be connected to said transfer line and fixing means operationally arranged between the gripping member and the support member so as to lock them together according to the preamble of claim 1.

The present invention also relates to a transfer line for transferring products.

In particular, the present invention relates to transfer lines composed of two facing chains provided with the abovementioned product holding devices. These chains work in pairs in order to hold the product and convey it along paths which may have substantially vertical sections or where the product is not supported at the bottom.

For this purpose, the product holding devices comprise the abovementioned gripping member consisting of a rubber element. The latter is generally provided with finger-like projections which extend in the zone lying between the two chains. The presence of the product between the two chains causes a slight deformation of the finger-like projections or the gripping member so as to hold the products.

It is obvious that the joint between the gripping member and the support member, intended to be connected to the transfer line, must ensure that the two members are locked together. Moreover this joint must be able to react to separating forces which are exerted both in a parallel direction and in a perpendicular direction with respect to the direction of travel of the products along the transfer line.

Product holding devices in which the gripping member is directly fixed to the support member are known. These devices have major drawbacks associated in particular with the poor strength and rigidity characteristics of the gripping member made of rubber. The result of this is that the efficiency with which the product is held is dependent upon the strength of the joint between the rubber element and a rigid member. It has been found that this strength may decrease for example when there is an increase in the width of the product to be transferred.

These drawbacks have been partially overcome by a device in which the rubber gripping member has a metal pin passing through it. The ends of the metal pin are inserted respectively into two holes formed in two flanges of the support member so as to effect the joint between the support member and the rubber element. A similar device according to the preamble of claim 1 is known from US 5 429 226.

The abovementioned devices also have major drawbacks. In fact, the attempt to improve the strength of the joint between gripping member and support member has negatively influenced the simplicity and rapidity of assembly of the said device. In fact, the steps for assembly of the device are complex in that, after inserting the pin into the rubber element, the ends of the said pin must interfere with the support member, being inserted into the holes formed in the flanges of the said support member.

From the above it becomes clear how there is a pressing need to provide a device for holding products, which can be assembled easily, quickly and such that it is able to withstand effectively the stresses exerted during transportation of the products, independently of the dimensions of the latter.

The problem underlying the present invention is to provide a device for holding products, which has structural and functional characteristics able to satisfy the abovementioned requirements and, at the same time, overcome the drawbacks mentioned with reference to the prior art.

This problem is solved by means of a device for holding products in a transfer line having the features of claim 1.

Further characteristic features and advantages of the product holding device according to the invention will emerge from the description provided below of a preferred non-limiting example of embodiment thereof, with reference to the accompanying drawings, in which:
Figure 1 shows a partial perspective view of a transfer line comprising product holding devices according to the present invention;
Figure 2 shows an exploded perspective view of a product holding device;
Figure 3 shows a partially sectioned perspective view of the device according to Figure 2, completely assembled;

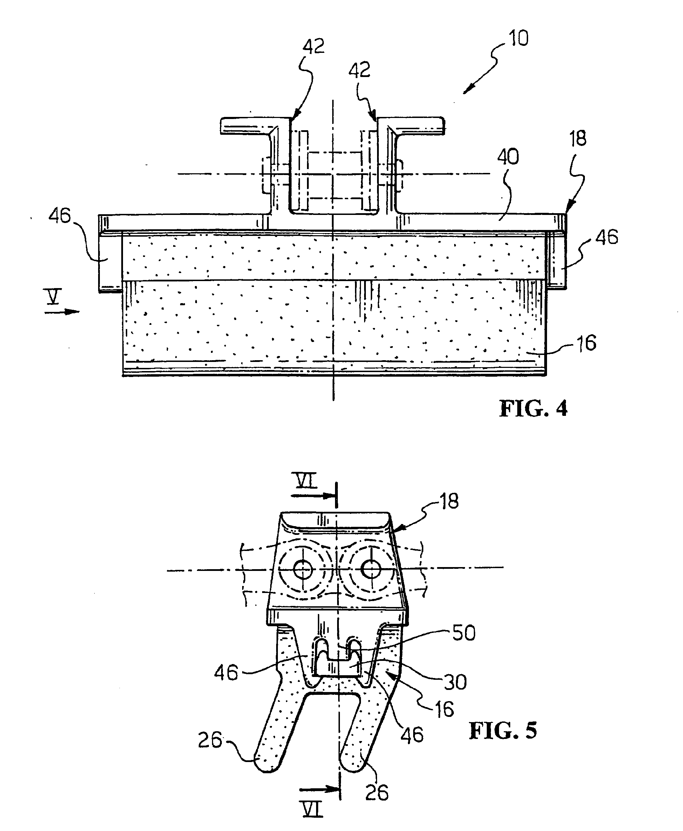

Figure 4 shows a side view of the device according to Figure 3;
Figure 5 shows a front view of the device according to Figure 3;

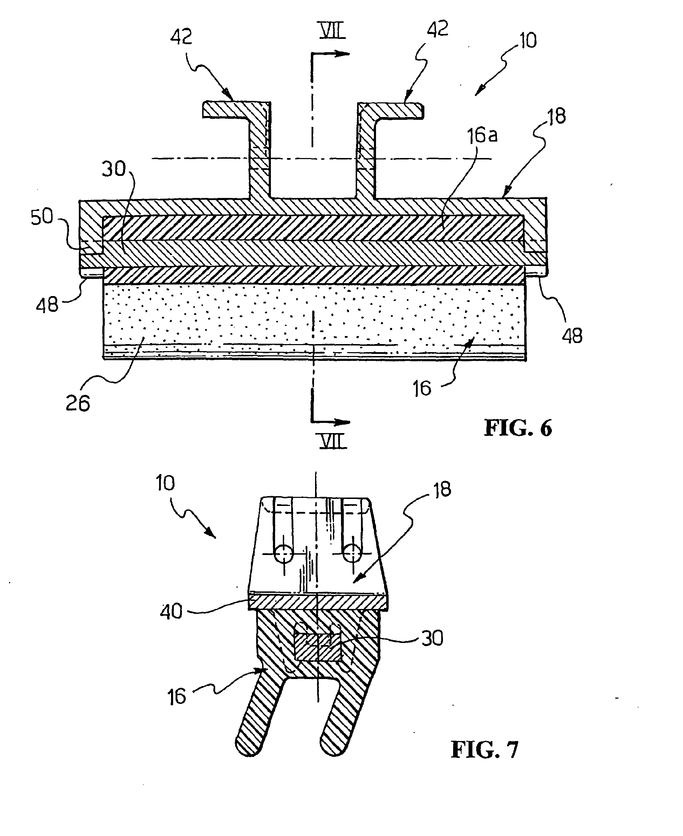

Figure 6 shows a sectioned view of the product holding device along the line VI-VI in Figure 5;
Figure 7 shows a sectioned view of the product holding device along the line VII-VII in Figure 6.

With reference to the abovementioned figures, 10 denotes in its entirety a device for holding products in a transfer line 12.

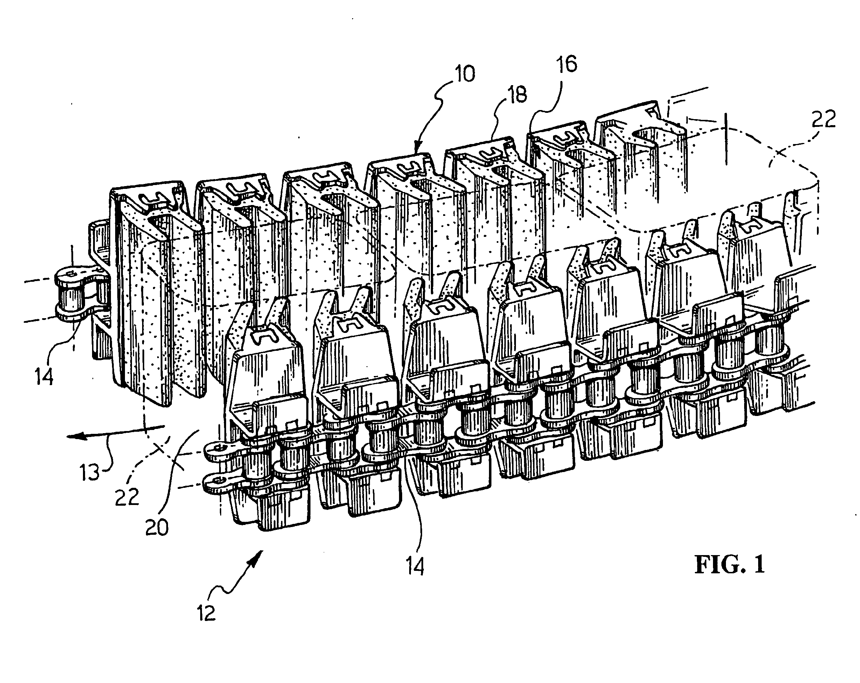

The term "transfer line" is understood as meaning a conveying device which transfers the products along a given path represented schematically by an arrow 13 in Figure 1 and indicating the direction and sense of movement of the products.

In Figure 1, this transfer line may, for example, be formed by means of two chains 14 wound onto pulleys so that the two chains are facing each other along at least one portion of the chain itself.

Each chain has a plurality of devices 10, each of which is formed by a gripping member 16 and a support member 18 designed to be connected to the respective chain 14 of the transfer line.

In particular, the devices 10 are arranged on the respective chains so that the gripping members 16 of each chain directly face the gripping members of the other chain, as shown in Figure 1.

The gripping members thus arranged define a channel 20 lying between the facing portions of the two chains and in particular between facing gripping members. When defining the abovementioned channel, the two chains and therefore the facing gripping members are arranged at a distance such that the product inserted inside the channel 20 interacts with the said gripping members.

Figure 1 shows, in fact, in broken lines, a product 22 - for example container - which is inserted inside the channel 20 between the two chains, so as to be conveyed along the path defined by the said channel.

The gripping members 16 are made of rubber extruded in a direction indicated by means of a longitudinal axis 24.

The gripping members 16 also have a portion 16a with a substantially parallelepipedal shape which, in the overall structure of the device 10, is arranged in contact with the support member 18.

From the portion 16a there protrude finger-like projections 26 which extend transversely from the said portion 16a and, in the area of the transfer line 12, are inserted laterally with respect to the channel 20. As shown in Figure 1, the finger-like projections 26 extend from the portion 16a in a direction inclined with respect to a direction perpendicular to the direction 13 followed by the products. More specifically, the finger-like projections 26 are inclined in the direction opposite to the direction of movement of the products as shown in Figure 1. Moreover, the finger-like projections 26 extend in a direction parallel to the longitudinal axis 24 along the whole length of the gripping member.

In addition to that stated above, the gripping member 16 has a cavity 28 which extends substantially inside the portion 16a in a direction parallel to the longitudinal axis 24. This cavity is open on both sides of the gripping member, thus forming a channel passing through the said gripping member.

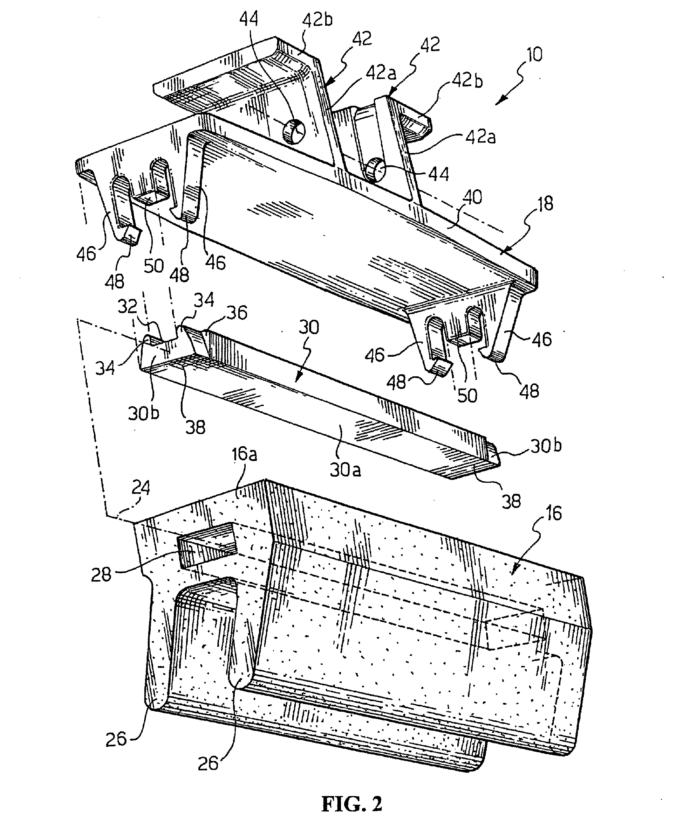

In accordance with that shown in Figure 2, the cavity 28 is intended to receive a reinforcing core 30 which, when the device 10 is assembled, extends along a longitudinal axis parallel to the longitudinal axis 24 of the gripping member 16.

In particular, the reinforcing core 30 is formed as one piece in which it is possible to distinguish a central portion 30a having a substantially parallelepied shape and two end portions 30b which form a continuous extension of the central portion 30a.

The central portion 30a has substantially a length equal to the length of the gripping member 16 so that, when the reinforcing core 30 is inserted into the cavity 28, the two end portions 30b project respectively on both sides of the gripping member 16.

In particular, each end portion 30b comprises respectively a groove 32 which extends along the whole length of the said portion and in a position symmetrical with respect to a longitudinal axis along which the reinforcing core 30 extends.

The groove 32 is defined laterally by two shoulders 34 which are also symmetrical with respect to the longitudinal axis of the reinforcing core 30. Moreover, at the transition point between one of the end portions 30b and the central portion 30a, the groove 32 is delimited by a transverse wall 36.

The groove 32 is formed on the side of the reinforcing core which, when the device 10 is assembled, is directed towards the support member 18. On the opposite side to that comprising the groove 32, the end portions 30b have a contact surface 38 substantially corresponding to the surface projecting from the gripping member 16. Finally, the side walls of the end portions 30b are inclined so that the width of the contact surface 38 is greater than the distance between the shoulders 34.

With regard to the support member 18, said member is formed by a member made of plastic material (for example acetal resin) comprising a substantially flat plate 40 with a rectangular shape and dimensions slightly greater than the surface of the portion 16a with which it makes contact. Similar to the gripping member 16, the support member 18 extends in a longitudinal direction corresponding to the greater axis of the plate 40 and parallel to the longitudinal axis 24 when the device 10 is assembled.

Two flanges 42 extend from the plate 40, and in particular on the opposite side to the gripping member 16, said flanges being arranged substantially perpendicular to the longitudinal extension of the support member. These flanges consist of a first portion 42a which extends perpendicularly from the plate 40 and a second portion 42b bent substantially at right angles with respect to the first portion 42a, towards the ends of the support member 18.

Each of the first portions 42a has holes 44 for mounting the support member 18 on the transfer line and in particular on the respective chain.

On the opposite side to the flanges 42, the support member 18 comprises two projecting portions which are respectively arranged along the short sides of the plate 40 and which below are also defined simply as ends of the plate 40.

In particular, two tongues 46, which are symmetrically arranged with respect to the greater axis of the plate 40, extend from each of the ends of the said plate.

Each tongue 46 comprises a tooth-shaped end 48 which faces the respective tongue arranged at the same end of the plate 40. In particular, the tooth-shaped ends 48 of each pair of tongues 46 is intended to engage with one of the contact surfaces 38 of the reinforcing core 30.

If we consider each pair of tongues 46, the said tongues are slightly elastic with respect to movements which tend to move the tooth-shaped ends 48 away from each other.

Moreover, a projecting portion 50 arranged centrally between the two tongues 46 extends from each of the ends of the plate 40.

This projecting portion 50 consists of a wall which is substantially perpendicular to the plate 40 and has a form countershaped with respect to the groove 32 of the reinforcing core 30, namely able to be inserted between the two shoulders 34. Moreover, the projecting portion 50 forms a part intended to bear against the transverse wall 36 of the groove 32 of the reinforcing core 30.

Assembly of a device for holding products in a transfer line according to the present invention is described below.

After manufacture of the individual parts, and therefore after formation of the gripping member 16 by means of extrusion and formation of the support member 18 and the reinforcing core 30 by means of moulding, the individual parts are assembled in accordance with the sequence described below and following the steps illustrated in Figure 2.

Firstly, the reinforcing core 30 is inserted into the cavity 28 so that the two end portions 30b project from the gripping member. Then the gripping member 16 provided with reinforcing core 30 is assembled with the support member 18.

During said assembly, the tongues 46 interact with the end portions 30b of the reinforcing core 30. In particular the tooth-shaped ends 48 slide along the side walls of the end portion. Since said side walls are inclined as described above, the tooth-shaped ends 48 move away from each other and the respective tongues 46 are elastically deformed.

When the tooth-shaped ends 48 are in the vicinity of the contact surface 38, the teeth snap-engage towards each other, due to the elastic reaction of the tongues 46, and engage against the contact surface 38.

As a result, the tongues 46, together with the respective tooth-shaped ends 48, and the reinforcing core 30, together with the respective end portions 30b, form part of fixing means which are operationally arranged between the gripping member 16 and the support member 18 so as to lock them together. More specifically, the said tongues and the end portions of the reinforcing core form snap-engaging parts.

The tongues 46, engaging against the contact surface 38, keep the gripping member 16 locked to the support member 18 in a direction perpendicular both to the longitudinal axis 24 and to the direction of travel 13 of the products.

The gripping member 16 is also locked to the support member 18 in a direction parallel to the direction of travel 13 of the products and in a direction parallel to the longitudinal axis 24.

For this purpose, the fixing means also comprise first locking means for preventing displacement of the gripping member in a direction parallel to a direction of travel of the transfer line.

These first locking means essentially consist of the male/female joint which is formed between the projecting portion 50 of the support member 18 and the groove 32 formed in each of the end portions 30b of the reinforcing core 30.

In fact, during assembly of the gripping member 16 and the support member 18, the shoulders 34 are positioned on the sides of the projecting portion 50 which is received inside the groove 32. As a result, the forces transmitted from the reinforcing core 30 to the support member 18, in a direction parallel to the direction 13 of travel of the products, are transmitted via the shoulders 34 and the projecting portion 50, without affecting the tongues 46 which form weaker elastic parts.

Finally, in order to lock the gripping member 16 to the support member 18 also in a direction parallel to the longitudinal axis 24 of the said gripping member and the reinforcing core, the fixing means comprise second locking means as defined below.

In particular, the second locking means comprise parts intended to come into bearing contact with each other and respectively formed on the reinforcing core 30 and on the support member 18. In the example illustrated, the contact part of the support member 18 is formed by the projecting portion 50 of the said support member, while the contact part of the reinforcing core 30 is formed by the transverse wall 36 of the groove 32.

Therefore, the forces transmitted from the reinforcing core 30 to the support member 18, in a direction parallel to the longitudinal axis 24, also do not affect the elastic parts such as for example the tongues 46, for example, being transmitted via more rigid parts.

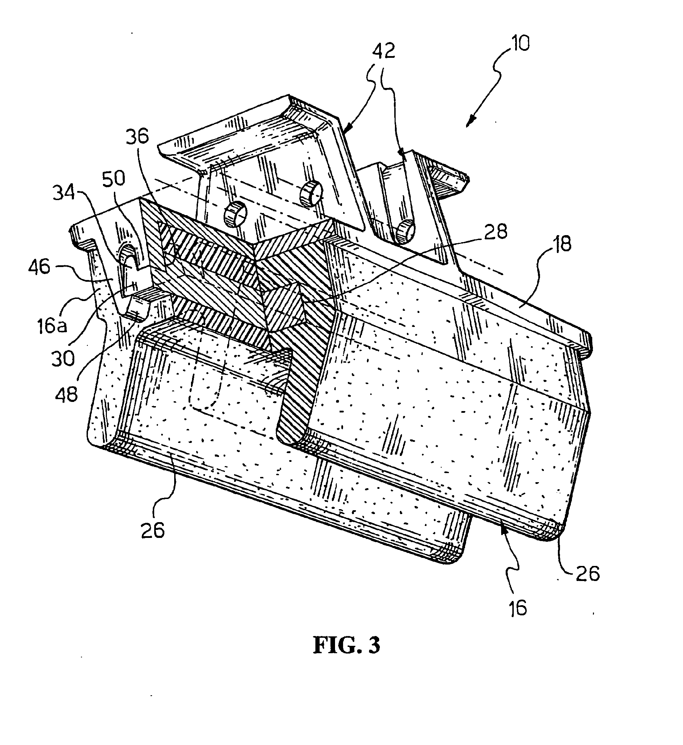

The assembled device 10 is illustrated in Figure 3, in which the mutual arrangement of the tongues 46, contact surface 38, projecting portion 50, groove 32 and shoulders 34 can be seen.

As can be understood from that described above, the device 10 for holding products according to the present invention is able to satisfy the abovementioned requirement of being able to assemble easily and rapidly the gripping member and support member. Owing to the presence of the snap-engaging parts, in fact, by simple assembly of the gripping member on the support member, it is possible to achieve an immediate and substantially stable relative fixture during use of the said device.

A further advantage of the device according to the invention consists in the presence of several parts allowing a differentiation between the function of mutual engagement of the gripping member and the support member and that of discharging of the forces transmitted from the gripping member to the support member. In this way it is possible to optimize the structure by allocating to the tongues 46 the sole function of engaging the two members and by concentrating the function of discharging of the forces in parts which are more rigid than the tongues, such as the shoulders 34, the projecting portion 50 and the transverse wall 36.

The above has been achieved without introducing constructional complications and therefore with limited production costs.

It is obvious that variations and/or additions to that described and illustrated above may be envisaged.

As an alternative to that shown in the figures, the gripping member 16 may consist of a rubber element without finger-like projections or the finger-like projections may differ in number or form to that described and illustrated above.

Even though the extruded gripping member has improved mechanical characteristics and a lower cost compared to parts made using other manufacturing methods, the gripping member 16, the support member 18 and the reinforcing core 30 may all be made using methods different from those indicated.

A person skilled in the art, in order to satisfy contingent and specific requirements, may carry out numerous modifications and adaptations of the preferred embodiment of the product holding device described above, replacing parts with other functionally equivalent parts, without, however, departing from the scope of the following claims.

## Claims

1. Device (10) for holding products in a transfer line (12) comprising:
a gripping member (16);
a support member (18) designed to be connected to said transfer line (12);
fixing means operationally arranged between the gripping member (16) and the support member (18) in order to lock them together,
said fixing means comprise snap-engaging parts (46, 48) for locking the gripping member (16) to the support member (18),
wherein the gripping member (16) comprises a reinforcing core (30) which extends along a longitudinal axis (24) of the said gripping member (16),
wherein the support member (18) comprises said snap-engaging parts (46, 48) designed to engage against a contact surface (38) of said reinforcing core (30) projecting from the gripping member (16),
**characterized in that** the snap-engaging parts comprise two tongues (46) which protrude from the support member (18) at each of the ends (30b) of the reinforcing core (30) and which are arranged on opposite sides of the longitudinal axis along which the said reinforcing core (30) extends,
wherein the fixing means comprise first locking means (32, 34, 50) for preventing the displacement of the gripping member (16) in a direction parallel to a direction of travel (13) of said transfer line (12),
and wherein said first locking means (32, 34, 50) comprise a male/female joint between at least one projecting portion (50) of the support member (18) and at least one groove (32) formed in the reinforcing core (30).

2. Device (10) according to claim 1, in which each of said tongues (46) comprises a toothshaped end (48) for engaging against the contact surface (38) of the reinforcing core (30).

3. Device (10) according to claim 1 or 2, in which the first locking means (32, 34, 50) comprise a male/female joint for each of the ends (30b) of the reinforcing core (30).

4. Device (10) according to any of the preceding claims, in which the projecting portion (50) protrudes from the support member (18) between the two tongues (46).

5. Device (10) according to one or more of the preceding claims, in which the fixing means comprise second locking means (36, 50) for preventing displacement of the gripping member (16) in a direction perpendicular to a direction of travel (13) of said transfer line (12).

6. Device (10) according to claims 1 and 5, in which said second locking means (36, 50) prevent the displacement of the gripping member (16) with respect to the support member (18) in a direction parallel to the longitudinal axis of the reinforcing core (30).

7. Device (10) according to claim 6, in which said second locking means (36, 50) comprise parts intended to come into bearing contact with each other and respectively formed on the reinforcing core (30) and on the support member (18).

8. Device (10) according to claims 3 and 7, in which the contact part of the support member (18) is formed by the projecting portion (50) of the said support member, while the contact part of the reinforcing core (30) is formed by a transverse wall (36) which delimits the groove (32) of the said reinforcing core.

9. Device (10) according to claim 1, wherein the reinforcing core (30) for a product gripping member (16) comprises a central portion (30a) and two end portions (30b) which form a continuous extension of the central portion (30a).

10. Device (10) according to claim 9, in which the central portion (30a) has substantially a length equal to the length of the gripping member (16).

11. Device (10) according to claim 10, in which each end portion (30b) comprises respectively a groove (32) which extends along the entire length of the said end portion (30b) and in a symmetrical position with respect to a longitudinal axis along which the said reinforcing core (30) extends.

12. Device (10) according to claim 11, in which the groove (32) is defined laterally by two shoulders (34) which are also symmetrical with respect to the longitudinal axis of the reinforcing core (30).

13. Device (10) according to claim 11 or 12, in which, at the transition point between one of the end portions (30b) and the central portion (30a), the groove (32) is delimited by a transverse wall (36).

14. Device (10) according to one of claims 11 to 13, in which, on the opposite side to that comprising the groove (32), the end portions (30b) have a contact surface (38).

15. Device (10) according to claim 14, in which the side walls of the end portions (30b) are inclined so that the width of the contact surface (38) is greater than the distance between the shoulders (34).

16. Device (10) according to claim 1, wherein the support member (18) for a product gripping member (16) comprises a substantially flat plate (40) from which the two tongues (46) for holding said gripping member (16) extend.

17. Device (10) according to claim 16, in which each of said tongues (46) comprises a tooth-shaped end (48).

18. Device (10) according to claim 16 or 17, in which said plate (40) comprises at least one projecting portion (50) having a form countershaped with respect to a groove (32) in the reinforcing core (30) of the gripping member (16).

19. Transfer line (12) comprising two facing chains provided with a plurality of devices (10) for holding products according to claims 1 to 8.

## Patentansprüche

1. Vorrichtung (10) zum Halten von Produkten in einer Förderlinie (12), mit:
einem Greifteil (16);
einem Halteteil (18), das zur Verbindung mit der Förderlinie (12) ausgebildet ist;
einer Fixiervorrichtung, die betriebsmäßig zwischen dem Greifteil (16) und dem Halteteil (18) angeordnet ist, um diese miteinander zu verriegeln,
wobei die Fixiervorrichtung Schnappeingriffsteile (46,48) zum Verriegeln des Greifteils (16) an dem Halteteil (18) aufweist,
wobei das Greifteil (16) einen Verstärkungskern (30) aufweist, der entlang einer Längsachse (24) des Greifteils (16) verläuft,
wobei das Halteteil (18) die Schnappeingriffsteile (46,48) aufweist, die ausgebildet sind zum Angreifen gegen eine von dem Greifteil (16) abstehende Kontaktfläche (38) des Verstärkungskerns (30),
**dadurch gekennzeichnet, dass** die Schnappeingriffsteile zwei Zungen (46) aufweisen, die an jedem der Enden (30b) des Verstärkungskerns (30) von dem Halteteil (18) abstehen und die an gegenüberliegenden Seiten der Längsachse angeordnet sind, entlang derer der Verstärkungskern (30) verläuft,
wobei die Fixiervorrichtung eine erste Verriegelungsvorrichtung (32, 34,50) zum Verhindern einer Verlagerung des Greifteils (16) in einer parallel zur Bewegungsrichtung (13) der Förderlinie (12) verlaufenden Richtung aufweist,
und wobei die erste Verriegelungsvorrichtung (32,34,50) eine männliche/weibliche Verbindung zwischen mindestens einem vorstehenden Teil (50) des Halteteils (18) und mindestens einer in dem Verstärkungskern (30) ausgebildeten Nut (32) aufweist.

2. Vorrichtung (10) nach Anspruch 1, bei der jede der Zungen (46) ein zahnförmiges Ende (48) zum Angreifen gegen die Kontaktfläche (38) des Verstärkungskerns (30) aufweist.

3. Vorrichtung (10) nach Anspruch 1 oder 2, bei der die erste Verriegelungsvorrichtung (32,34,50) eine männliche/weibliche Verbindung für jedes der Enden (30b) des Verstärkungskerns (30) aufweist.

4. Vorrichtung (10) nach einem der vorhergehenden Ansprüche, bei der der vorstehende Teil (50) von dem Halteteil (18) zwischen den beiden Zungen (46) vorsteht.

5. Vorrichtung (10) nach einem oder mehreren der vorhergehenden Ansprüche, bei der die Fixiervorrichtung eine zweite Verriegelungsvorrichtung (36,50) zum Verhindern einer Verlagerung des Greifteils (16) in einer rechtwinklig zur Bewegungsrichtung (13) der Förderlinie (12) verlaufenden Richtung aufweist.

6. Vorrichtung (10) nach Anspruch 1 und 5, bei der die zweite Verriegelungsvorrichtung (36,50) eine Verlagerung des Greifteils (16) relativ zu dem Halteteil (18) in einer parallel zur Längsachse des Verstärkungskerns (30) verlaufenden Richtung verhindert.

7. Vorrichtung (10) nach Anspruch 6, bei der die zweite Verriegelungsvorrichtung (36,50) Teile aufweist, die zur Bewegung in gegenseitigen Anlagekontakt vorgesehen sind und an dem Verstärkungskern (30) bzw. an dem Halteteil (18) ausgebildet sind.

8. Vorrichtung (10) nach Anspruch 3 und 7, bei der der Kontaktteil des Halteteils (18) durch den vorstehenden Teil (50) des Halteteils gebildet ist, während der Kontaktteil des Verstärkungskerns (30) durch eine Querwand (36) gebildet ist, welche die Nut (32) des Verstärkungskerns begrenzt.

9. Vorrichtung (10) nach Anspruch 1, bei der der Verstärkungskern (30) für ein Produktgreifteil (16) einen zentralen Teil (30a) und zwei Endteile (30b) aufweist, die eine durchgehende Verlängerung des zentralen Teils (30a) bilden.

10. Vorrichtung (10) nach Anspruch 9, bei der der zentrale Teil (30a) eine Länge hat, die der Länge des Greifteils (16) im Wesentlichen gleich ist.

11. Vorrichtung (10) nach Anspruch 10, bei der jeder Endteil (30b) jeweils eine Nut (32) aufweist, die entlang der gesamten Länge des Endteils (30b) und in einer symmetrischen Position relativ zu einer Längsachse verläuft, entlang derer sich der Verstärkungskern (30) erstreckt.

12. Vorrichtung (10) nach Anspruch 11, bei der die Nut (32) seitlich durch zwei Schultern (34) begrenzt ist, die ebenfalls relativ zu der Längsachse des Verstärkungskerns (30) symmetrisch sind.

13. Vorrichtung (10) nach Anspruch 11 oder 12, bei der am Übergangspunkt zwischen einem der Endteile (30b) und dem zentralen Teil (30a) die Nut (32) durch eine Querwand (36) begrenzt ist.

14. Vorrichtung (10) nach einem der Ansprüche 11 bis 13, bei der an der Seite, die der mit der Nut (32) versehenen Seite gegenüberliegt, die Endteile (30b) eine Kontaktfläche (38) aufweisen.

15. Vorrichtung (10) nach Anspruch 14, bei der die Seitenwände der Endteile (30b) derart schräg verlaufen, das die Breite der Kontaktfläche (38) größer ist als der Abstand zwischen den Schultern (34).

16. Vorrichtung (10) nach Anspruch 1, bei der das Halteteil (18) für ein Produktgreifteil (16) eine im Wesentlichen flache Platte (40) aufweist, von der die beiden Zungen (46) zum Halten des Greifteils (16) abstehen.

17. Vorrichtung (10) nach Anspruch 16, bei der jede der Zungen (46) ein zahnförmiges Ende (48) aufweist.

18. Vorrichtung (10) nach Anspruch 16 oder 17, bei der die Platte (40) mindestens einen vorstehenden Teil (50) mit einer Form aufweist, die derjenigen einer in dem Verstärkungskern (30) des Greifteils (16) ausgebildeten Nut (32) komplementär ist.

19. Förderlinie (12) mit zwei einander gegenüberliegenden Ketten, die mit mehreren gemäß den Ansprüchen 1 bis 8 ausgebildeten Vorrichtungen (10) zum Halten von Produkten versehen sind.

## Revendications

1. Dispositif (10) de maintien d'articles dans une ligne de transfert (12) comportant :
un élément de prise (16) ;
un élément de support (18) conçu pour être raccordé à ladite ligne de transfert (12) ;
des moyens de fixation disposés fonctionnellement entre l'élément de prise (16) et l'élément de support (18) afin de les bloquer ensemble ;
lesdits moyens de fixation comportent des parties d'engagement par encliquetage (46, 48) permettant de bloquer l'élément de prise (16) sur l'élément de support (18),
dans lequel l'élément de prise (16) comprend une partie centrale de renforcement (30) qui s'étend le,long d'un axe longitudinal (24) dudit élément de prise (16),
dans lequel l'élément de support (18) comprend lesdites parties d'engagement par encliquetage (46, 48) conçues en vue de s'engager contre une surface de contact (38) de ladite partie centrale de renforcement (30) s'avançant à partir de l'élément de prise (16),
**caractérisé en ce que** les parties d'engagement par encliquetage comportent deux languettes (46) qui font saillie à partir de l'élément de support (18) au niveau de chacune des extrémités (30b) de la partie centrale de renforcement (30) et qui sont disposées sur les côtés opposés de l'axe longitudinal le long duquel s'étend ladite partie centrale de renforcement (30),
dans lequel les moyens de fixation comprennent des premiers moyens de blocage (32, 34, 50) pour empêcher le déplacement de l'élément de prise (16) dans une direction parallèle à une direction de circulation (13) de ladite ligne de transfert (12),
et dans lequel lesdits premiers moyens de blocage (32, 34, 50) comprennent une jonction de type mâle/femelle située entre au moins une partie en relief (50) de l'élément de support (18) et au moins une gorge (32) formée dans la partie centrale de renforcement (30).

2. Dispositif (10) selon la revendication 1, dans lequel chacune desdites languettes (46) comporte une extrémité configurée en forme de dent (48) pour s'engager contre la surface de contact (38) de la partie centrale de renforcement (30).

3. Dispositif (10) selon la revendication 1 ou 2, dans lequel les premiers moyens de blocage (32, 34, 50) comprennent une jonction de type mâle/femelle correspondant à chacune des extrémités (30b) de la partie centrale de renforcement (30).

4. Dispositif (10) selon l'une quelconque des revendications précédentes, dans lequel la partie en relief (50) fait saillie à partir de l'élément de support (18) entre les deux languettes (46).

5. Dispositif (10) selon l'une ou plusieurs des revendications précédentes, dans lequel les moyens de fixation comportent des second moyens de blocage (36, 50) pour empêcher un déplacement de l'élément de prise (16) dans une direction perpendiculaire à une direction de circulation (13) de ladite ligne de transfert (12).

6. Dispositif (10) selon les revendications 1 et 5, dans lequel lesdits seconds moyens de blocage (36, 50) empêchent le déplacement de l'élément de prise (16) par rapport à l'élément de support (18) dans une direction parallèle à l'axe longitudinal de la partie centrale de renforcement (30).

7. Dispositif (10) selon la revendication 6, dans lequel lesdits seconds moyens de blocage (36, 50) comportent des parties conçues de façon à venir en contact d'appui l'une sur l'autre et formées, respectivement, sur la partie centrale de renforcement (30) et sur l'élément de support (18).

8. Dispositif (10) selon les revendications 3 et 7, dans lequel la partie de contact de l'élément de support (18) est formée par la partie en relief (50) dudit élément de support, tandis que la partie de contact de la partie centrale de renforcement (30) est formée par une paroi transversale (36) qui délimite la gorge (32) de ladite partie centrale de renforcement.

9. Dispositif (10) selon la revendication 1, dans lequel la partie centrale de renforcement (30) correspondant à un élément de prise d'article (16) comporte une section centrale (30a) et deux sections d'extrémité (30b) qui forment une extension continue de la partie centrale (30a).

10. Dispositif (10) selon la revendication 9, dans lequel la section centrale (30a) présente une longueur essentiellement égale à la longueur de l'élément de prise (16).

11. Dispositif (10) selon la revendication 10, dans lequel chaque section d'extrémité (30b) comporte, respectivement, une gorge (32) qui s'étend le long de toute la longueur de ladite section d'extrémité (30b) et dans une position symétrique par rapport à un axe longitudinal le long duquel s'étend ladite partie centrale de renforcement (30).

12. Dispositif (10) selon la revendication 11, dans lequel la gorge (32) est définie, de façon latérale, par deux épaulements (34) qui sont également symétriques par rapport à l'axe longitudinal de la partie centrale de renforcement (30).

13. Dispositif (10) selon la revendication 11 ou 12, dans lequel, au niveau du point de transition entre l'une des sections d'extrémité (30b) et la section centrale (30a), la gorge (32) est délimitée par une paroi transversale (36).

14. Dispositif (10) selon l'une des revendications 11 à 13, dans lequel, sur le côté opposé à celui qui comporte la gorge (32), les sections d'extrémité (30b) présentent une surface de contact (38).

15. Dispositif (10) selon la revendication 14, dans lequel les parois latérales des sections d'extrémité (30b) sont inclinées de sorte que la largeur de la surface de contact (38) est plus grande que la distance comprise entre les épaulements (34).

16. Dispositif (10) selon la revendication 1, dans lequel l'élément de support (18) correspondant à un élément de prise d'article (16) comporte une plaque essentiellement plate (40) à partir de laquelle s'étendent les deux languettes (46) servant à maintenir ledit élément de prise (16).

17. Dispositif (10) selon la revendication 16, dans lequel chacune desdites languettes (46) comprend une extrémité configurée en forme de dent (48).

18. Dispositif (10) selon la revendication 16 ou 17, dans lequel ladite plaque (40) comporte au moins une partie en relief (50) présentant une configuration en inverse par rapport à celle d'une gorge (32) dans la partie centrale de renforcement (30) de l'élément de prise (16).

19. Ligne de transfert (12) comprenant deux chaînes se faisant face, dotées d'une pluralité de dispositifs (10) destinés à maintenir des articles selon les revendications 1 à 8.
